# EUROPÄISCHE PATENTSCHRIFT

(11) **EP 2 331 229 B1**
(45) Veröffentlichungstag und Bekanntmachung des Hinweises auf die Patenterteilung: **25.12.2013**
(21) Anmeldenummer: 09780966.9
(22) Anmeldetag: 23.07.2009
(51) Int. Cl.: B01D 36/00

(54) **FILTEREINRICHTUNG**
FILTER DEVICE
DISPOSITIF DE FILTRAGE

(30) Priorität: 18.08.2008 DE 102008038160
(43) Veröffentlichungstag der Anmeldung: 15.06.2011
(73) Patentinhaber: Mahle International GmbH, 70376 Stuttgart (DE)
(72) Erfinder: BRAUNHEIM, Michael, 73033 Göppingen (DE)
(74) Vertreter: BRP Renaud & Partner
(86) Internationale Anmeldenummer: PCT/EP2009/059475
(87) Internationale Veröffentlichungsnummer: WO 2010/020514

(56) Entgegenhaltungen:
- EP-A- 1 256 707
- EP-A- 1 932 574
- JP-A- 5 231 257

## Beschreibung

Die vorliegende Erfindung betrifft eine Filtereinrichtung für einen Verbrennungsmotor eines Kraftfahrzeuges, gemäß dem Oberbegriff des Anspruchs 1. Die Erfindung betrifft außerdem ein Kraftfahrzeug mit einem, eine derartige Filtereinrichtung aufweisenden Verbrennungsmotor.

Filtereinrichtungen, insbesondere Kraftstoff-/Schmierstofffilter, sind in modernen Kraftfahrzeugen weit verbreitet und dienen zur Reinigung der Kraft- bzw. Schmierstoffe. Allen üblichen Kraft-/Schmierstoffen ist dabei jedoch gemein, dass diese einen, wenn auch nur unwesentlichen, Anteil an Wasser enthalten, welcher einerseits den Kraft-/Schmierstoff bezüglich seiner Funktion beeinträchtigt und andererseits ein Korrosionsrisiko für den Verbrennungsmotor erhöht. Aus diesem Grund sind bereits eine Vielzahl von sogenannten Wasserabscheidern bekannt, mit welchen versucht wird, den noch im Kraft-/Schmierstoff enthaltenen Wasseranteil soweit wie möglich herauszufiltern bzw. zu separieren. Je höher dabei ein erreichbarer Wasserabscheidegrad ist, umso geringer ist das auftretende Korrosionsrisiko bzw. die Gefahr einer Beeinträchtigung der Funktionsweise des Verbrennungsmotors durch den Wasseranteil.

Dokument EP 1 256 707 A2 beschreibt ein Kraftstofffilter mit Wasserabscheidenden Mitteln.

Die vorliegende Erfindung beschäftigt sich mit dem Problem, eine verbesserte Ausführungsform einer gattungsgemäßen Filtereinrichtung anzugeben, welche sich insbesondere durch eine besonders gute Wasserabscheidung auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einer Filtereinrichtung, insbesondere einem Kraftstoff- oder Schmierstofffilter, auf einer Reinseite eines Filterelementes der Filtereinrichtung einen Wasserabscheider anzuordnen, welcher eine von radial außen nach radial innen für Kraftstoff-/Schmierstoff durchgängige, hydrophobe und sich in Axialrichtung des Filterelementes erstreckende, ringförmige Membran aufweist. Die Anordnung des Wasserabscheiders unterhalb des Filterelementes, welches als sogenanntes Ringfilterelement ausgebildet ist, schafft einen Sedimentationsraum auf einer Rohseite des Wasserabscheiders, welcher in Verbindung mit der hydrophoben Membran bewirkt, dass die Wasseranteile des Kraftstoff bzw. Schmierstoffes vorzugsweise vollständig aus diesem herausgefiltert werden können. Die Membran ist dabei stehend angeordnet und von radial außen nach radial innen durchströmt. Durch die Tatsache, dass der Rohraum bezüglich des Wasserabscheiders radial gesehen außen liegt, kann die Strömungsgeschwindigkeit in diesem Rohraum im Vergleich zur Strömungsgeschwindigkeit im Reinraum bezüglich des Filterelementes deutlich reduziert werden, wodurch die Sedimentationswirkung des schwereren Wassers zusätzlich unterstützt wird. Die stehend angeordnete ringförmige Membran, durch welche der Kraft- bzw. Schmierstoff hindurchtreten muss, bewirkt beim Betrieb der erfindungsgemäßen Filtereinrichtung zusätzlich eine Strömungsumlenkung des zu reinigenden Kraftstoffes bzw. Schmierstoffes, der zunächst parallel zur Membran strömt und erst kurz vor dem Durchtritt durch dieselbe in eine orthogonal zur Membran verlaufende Richtung umgelenkt wird. Hierdurch kann sich das abzuscheidende Wasser besonders leicht und wirkungsvoll auf der hydrophoben Oberfläche der Membran sammeln und entlang dieser aufgrund der Schwerkraft nach unten in einen Wassersammelraum/Sedimentationsraum abfließen. Von entscheidendem Vorteil ist dabei die bereits eingangs angesprochene geringe Strömungsgeschwindigkeit im Rohraum des Wasserabscheiders, wodurch dort eine besonders hohe Sedimentationsrate an abzuscheidendem Wasser erzielt und dadurch eine besonders gute Wasserabscheidung erreicht werden kann. Durch die hohe Wasserabscheiderate kann insbesondere das Korrosionsrisiko des Verbrennungsmotors reduziert und die Funktion des Kraftstoffes bzw. des Schmierstoffes erhöht werden.

Das Filterelement der Filtereinrichtung ist ebenso wie der Wasserabscheider von radial außen nach radial innen durchströmt, wobei in Axialrichtung zwischen dem Filterelement und dem Wasserabscheider gesehen ein Strömungskanal vorgesehen ist, der die Reinseite des Filterelementes mit der Rohseite des Wasserabscheiders verbindet und der von dem gefilterten Kraftstoff bzw. Schmierstoff spiralförmig nach radial außen durchströmt wird. Durch eine derartige Kanalführung kann somit erreicht werden, dass an der Rohseite des Wasserabscheiders eine geringere Strömungsgeschwindigkeit herrscht als an der Reinseite des Filterelementes, wodurch, wie im vorherigen Absatz detailliert beschrieben, die Sedimentationsrate an abzuscheidendem Wasser erhöht und damit der Abscheidegrad verbessert werden können. Darüber hinaus ist durch eine derartige Strömungsführung innerhalb der Filtereinrichtung eine besonders kompakte Bauweise derselben möglich, was insbesondere im Hinblick auf ein immer kleiner werdendes Bauraumangebot in modernen Motorräumen von besonderem Vorteil ist.

Bei einer weiteren vorteilhaften Ausführungsform der erfindungsgemäßen Lösung, sind das Filterelement und der Wasserabscheider entweder als separate Bauteile oder als gemeinsames Kombinationsbauteil ausgebildet. Die Ausbildung als separate Bauteile bietet dabei den Vorteil, dass sowohl das Filterelement als auch der Wasserabscheider bedarfsgerecht, das heißt individuell, ausgetauscht werden können, so dass ein unnötiger Austausch des Filterelementes bzw. des Wasserabscheiders bei lediglich austauschwürdigen Wasserabscheider bzw. Filterelement unterbleiben kann. Eine Ausbildung als Kombinationsbauteil hingegen hat den Vorteil, dass stets beide Komponenten, das heißt sowohl das Filterelement als auch der Wasserabscheider, ausgetauscht werden, wodurch einerseits der Montage- bzw. Demontageaufwand reduziert und damit kostengünstiger gestaltet werden kann und andererseits geringere Lager- und Logistikkosten zu erwarten sind, da bei einem Kombinationsbauteil nicht zwei separate Bauteile gelagert bzw. logistisch betreut werden müssen.

Zweckmäßig ist auf der Reinseite des Filterelementes, insbesondere an einer Außenseite einer Innenzarge desselben, ein Koaleszer vorgesehen. Ein derartiger Koaleszer kann beispielsweise definiert auf das Koaleszenzverhalten der abzusondernden Flüssigkeit, hier also des Wassers, abgestimmt sein, wodurch ein besonders hoher Wasserabscheidegrad erzielt werden kann. Als Koaleszer werden üblicherweise poröse Materialien, Drahtgestricke sowie Füllkörper eingesetzt, welche von dem Flüssigkeitsgemisch durchströmt werden. Generell funktionieren dabei Koaleszer immer nach demselben Prinzip, sie bilden nämlich eine Durchgangssperre für kleine Tröpfchen des zu koaleszierenden Materials, welche an dieser Durchgangssperre hängen bleiben und sich nach und nach zu größeren Einheiten verbinden (koalieren). Erreichen die koaleszierten Tropfen eine bestimmte, vordefinierte Größe, so können sie aufgrund der Schwerkraft am Koaleszer entlang laufen und unterhalb diesem gesammelt werden. Generell sind derartige koaleszierende Materialien kostengünstig und in nahezu jeder beliebiger Ausführungsform herstellbar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch eine erfindungsgemäße Filtereinrichtung,
- Fig. 2: eine Detaildarstellung einer möglichen Ausführungsform einer Filtereinrichtung mit einem Wasserabscheider,
- Fig. 3: eine Darstellung wie in Fig. 2, jedoch bei einer geringfügig anderen Ausführungsform,
- Fig. 4a: einen Wasserabscheider mit einem daran befestigten Rohr als Aufnahmedorn für ein Filterelement,
- Fig. 4b: ein auf dem Dorn gemäß der Fig. 4a aufnehmbares bzw. aufsetzbares Filterelement,
- Fig. 5: einen Längsschnitt durch eine Filtereinrichtung bei einer weiteren Ausführungsform,
- Fig. 6: eine Darstellung wie in Fig. 4a, jedoch bei einer Explosionsdarstellung.

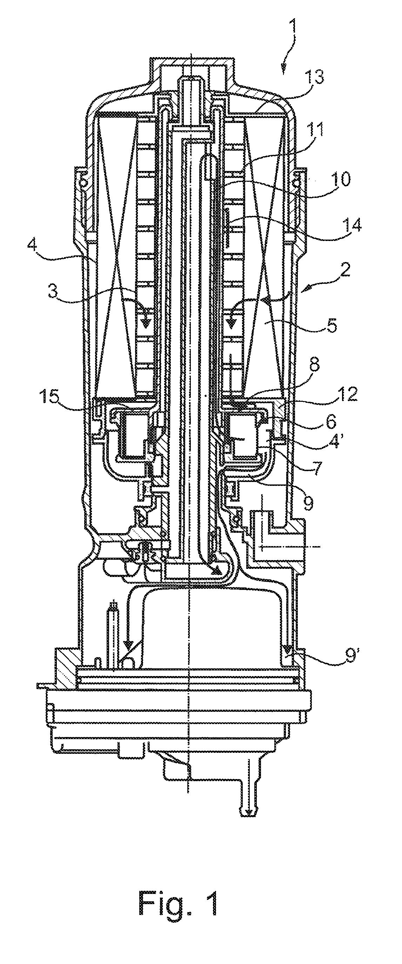

Entsprechend der Fig. 1, weist eine erfindungsgemäße Filtereinrichtung 1, welche beispielsweise als Kraftstofffilter ausgebildet ist, ein Filtergehäuse 2 sowie ein in diesem angeordnetes und in Radialrichtung von einer Rohseite 4 zu einer Reinseite 3 durchströmtes Ringfilterelement 5 auf. In diesem Fall liegt die Rohseite 4 radial außen, während die Reinseite 3 des Filterelementes 5 radial innen angeordnet ist. Auf der Reinseite 3 des Filterelementes 5, genauer gesagt unterhalb desselben, ist ein Wasserabscheider 6 angeordnet, der ebenfalls von radial außen nach radial innen durchströmt wird und eine kraft-/schmierstoffdurchgängige aber hydrophobe und sich in Axialrichtung des Filterelementes 5 erstreckende, ringförmige Membran 7 aufweist.

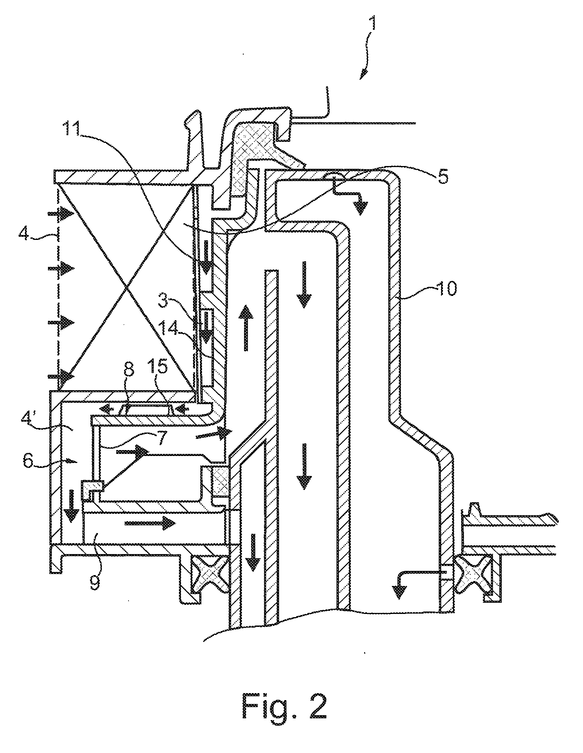

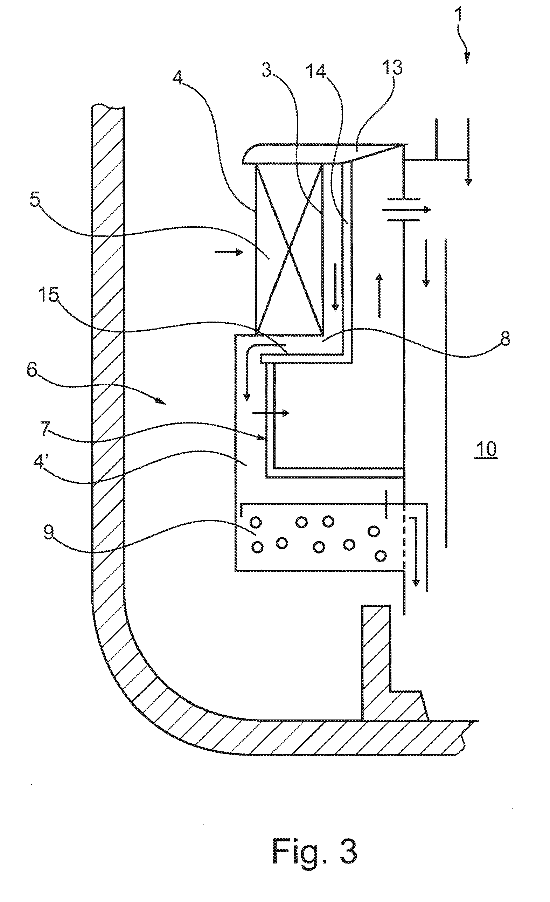

Zusammen mit den Fig. 2 und 3, welche eine Detaildarstellung der erfindungsgemäßen Filtereinrichtung 1 bei unterschiedlichen Ausführungsformen im Bereich des Wasserabscheider 6 zeigen, lässt sich die Funktionsweise der erfindungsgemäßen Filtereinrichtung 1 und insbesondere die mit dem erfindungsgemäßen Wasserabscheider 6 erhöhte Wasserabscheiderate anschaulich erklären: Zunächst strömt der zu filternde Kraftstoff von der Rohseite 4 durch das Filterelement 5 zu dessen Reinseite 3. Nach dem Austritt aus dem Filterelement 5 auf der Reinseite 3, strömt der Kraftstoff gemäß den Figuren 1 bis 3 in im Wesentlichen vertikaler Richtung nach unten, das heißt in Axialrichtung der Filtereinrichtung 1 bis zu einem in Axialrichtung zwischen dem Filterelement 5 und dem Wasserabscheider 6 angeordneten Strömungskanal 8, der die Reinseite 3 des Filterelementes 5 mit einer Rohseite 4' des Wasserabscheiders 6 verbindet und welcher von dem Kraftstoff spiralförmig nach radial außen durchströmt ist, so dass an der Rohseite 4' des Wasserabscheiders 6 eine geringere Strömungsgeschwindigkeit herrscht als noch an der Reinseite 3 des Filterelementes 5. Die Form des Strömungskanals 8 entspricht dabei im Wesentlichen derjenigen eines ringförmigen Hohlraums, der in Radialrichtung von innen nach außen durchströmt wird. Die so erzeugte Strömung fließt tangential entlang der Membran 7, die beispielsweise auch als Siebeinsatz ausgeführt sein kann. Erzeugt werden kann die Strömung beispielsweise durch Stege die an einer Strömungskanalwand 15 angebracht sind. Sie können prinzipiell zwei Funktionen gleichzeitig erfüllen, nämlich erstens das Halten der unteren Endscheibe 12 des Filterelementes 5 in Abstand zum Wasserabscheider 6, so dass ein gleich bleibender Strömungsquerschnitt des Strömungskanals 8 gewährleistet werden kann, und zweitens kann durch die Form der Stege die Strömung des Kraftstoffes beeinflusst werden. Zum erzeugen der spiralförmigen Strömung können beispielsweise gebogene Stege, die radial nach außen gekrümmt sind, eingesetzt werden.

Durch die geringere Strömungsgeschwindigkeit auf der Rohseite 4' des Wasserabscheiders 6, ist dort eine besonders gute Sedimentation der im Kraftstoffgemisch mitgeführten Wasseranteile möglich, so dass sich diese aufgrund der Schwerkraft in einem Wassersammelraum 9 sammeln können. Eine Rotation des Kraftstoff-Wassergemisches auf der Rohseite 4' des Wasserabscheiders 6 wirkt aufgrund der Zentrifugalkräfte günstig auf die Trennung von Wasser und Kraftstoff. Ein Durchtritt durch die Membran 7, wie sie für den Kraftstoff möglich ist, ist für Wasser erheblich erschwert, da die Membran 7 hydrophob, das heißt also zumindest wasserabweisend ausgebildet ist. Eine derartige hydrophobe Membran 7, kann insbesondere als Sieb oder als Drahtgestrick ausgebildet sein.

Eine Rotation des Kraft-/Schmierstoffes auf der Rohseite 4' des Wasserabscheiders 6, vermeidet die Ausbildung lokaler stationärer Strömungen um einen Wassertropfen, die diesen Tropfen auf der Membran festhalten und letztendlich hindurchdrücken könnten und fördert so die Sedimentation der im Kraftstoffgemisch mitgeführten Wasseranteile. Der Wasserabscheider 6 kann dabei (herstellungsbedingt oder auch konstruktiv beeinflussbar) über den Umfang verteilt Bereiche aufweisen, mit unterschiedlichen Strömungsgeschwindigkeiten des Kraft-/Schmierstoffes von außen nach innen auf. Das mengenmäßig meiste Wasser kommt in den Bereichen mit den hohen Strömungsgeschindigkeiten auf die Membran 7. Der Wassertropfen bleibt auf der Membran 7 hängen, der Kraft-/Schmierstoff strömt um diesen Wassertropfen herum und drückt den Tropfen mit einer Kraft auf die Membran 7. Damit die Gravitationskraft den Tropfen nach unten ziehen kann, muss nun die "Reibungskraft" (die Membran 7 ist nicht glatt ggf. kann sich sogar ein Formschluss zwischen Tröpfen und Membran 7 bilden) zwischen Membran 7 und Tropfen überwunden werden. In Bereichen mit geringerer Strömungsgeschwindigkeit sind die Kräfte, die den Wassertropfen auf die Membran 7 drücken kleiner, bei Strömungsgeschwindigkeit von Null sind die Kräfte auch null. Die Gravitationskraft kann in diesen Bereichen Tropfen leichter nach unten ziehen können als in Bereichen hoher Strömungsgeschwindigkeiten. Die Rotation der Kraftstoffmenge transportiert nun die auf der Membran 7 abgeschiedenen Wassertropfen durch die vorhandenen oder konstruierten Bereiche mit hohen und niedrigen Strömungsgeschwindigkeiten. Vorzugsweise in Bereichen mit geringerer Strömungsgeschwindigkeit, insbesondere wenn Stützgeometrien/Stege den direkten Weg durch die Membran 7 versperren, sinken die Wassertropfen auf der Membran 7 ab und sammeln sich im Wassersammelraum 9.

Aus dem Wassersammelraum 9 kann das abgeschiedene Wasser bei Bedarf abgelassen werden, wobei auch denkbar ist, dass wie in Fig. 1 gezeigt wird, ein weiterer Wassersammelraum 9' unterhalb des eben beschriebenen Wassersammelraums 9 angeordnet ist, in welchem der im abgeschiedenen Wasser noch verbliebene Kraftstoff separiert und einem Kraftstoffkreislauf wieder zugeführt werden kann.

Besonders in den Fig. 1 - 3 ist dabei gut zu erkennen, dass der Kraftstoff, um durch die Membran 7 hindurchzugelangen, einer Richtungsänderung bedarf, so dass die zunächst im Rohraum 4' des Wasserabscheiders 6 parallel zur Membran 7 verlaufende Kraftstoffströmung in eine Orthogonalrichtung zur Membran 7 umgelenkt wird. Das im Vergleich zum Kraft-/Schmierstoff schwerere Wasser sinkt dabei entweder bereits bei der Richtungsänderung des Kraft-/Schmierstoffstroms weiter in vertikaler Richtung nach unten in den Wassersammelraum 9 oder aber es wird vom Kraft-Schmierstoff mitgerissen und sammelt sich an der hydrophoben Oberfläche der Membran 7.

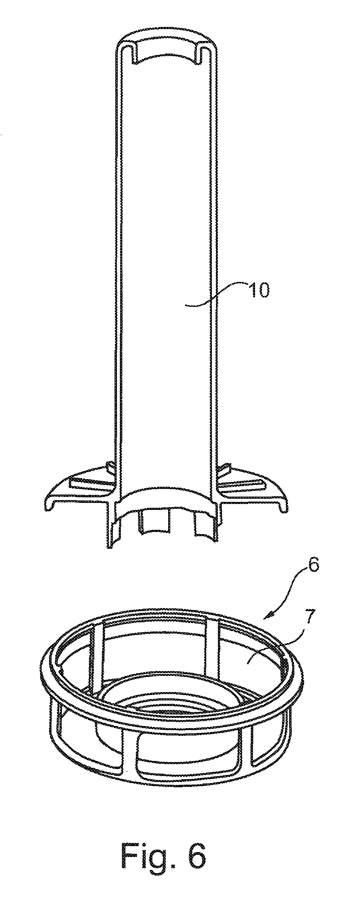

Um einen Einbau des Wasserabscheiders 6 in der Filtereinrichtung 1 vereinfachen zu können, kann beispielsweise vorgesehen sein, dass sich der Wasserabscheider 6 nach unten konisch verjüngt. Darüber hinaus kann ein in Axialrichtung vom Wasserabscheider 6 abstehendes Rohr 10 (vgl. insbesondere Fig. 6) vorgesehen sein, welches zugleich als Aufnahmedorn zur Halterung des Filterelementes 5 dient. Zwischen dem Filterelement 5 und dem Rohr 10 kann dabei optional eine das Filterelement 5 aussteifende Innenzarge 11 vorgesehen sein, welche garantiert, dass das üblicherweise als Faltenstern ausgebildete Filterelement 5 seine gewünschte Form beibehält. Dabei sind das Rohr 10 und der Wasserabscheider 6 üblicherweise unlösbar miteinander verbunden, insbesondere miteinander verschweißt.

Um die Reparatur bzw. Wartung der erfindungsgemäßen Filtereinrichtung 1 individuell gestalten zu können, kann vorgesehen sein, dass das Filterelement 5 und der Wasserabscheider 6 als separate Bauteile ausgebildet und dadurch bedarfsgerecht separat ausgetauscht bzw. gewartet werden können. Alternativ ist vorstellbar, dass das Filterelement 5 und der Wasserabscheider 6 ein gemeinsames Kombinationsbauteil bilden, so dass bei einem Austausch des Filterelementes 5 automatisch auch der Wasserabscheider 6 mit seiner Membran 7 mit ausgetauscht wird. Letztere Bauweise bietet dabei den Vorteil, dass statt zwei separaten und in einem Montageschritt zunächst miteinander zu verbindenden Komponenten lediglich ein Kombinationsbauteil gelagert und eingebaut werden muss, wodurch sich einerseits die Lager- und Logistikkosten und andererseits die Herstellungskosten reduzieren lassen.

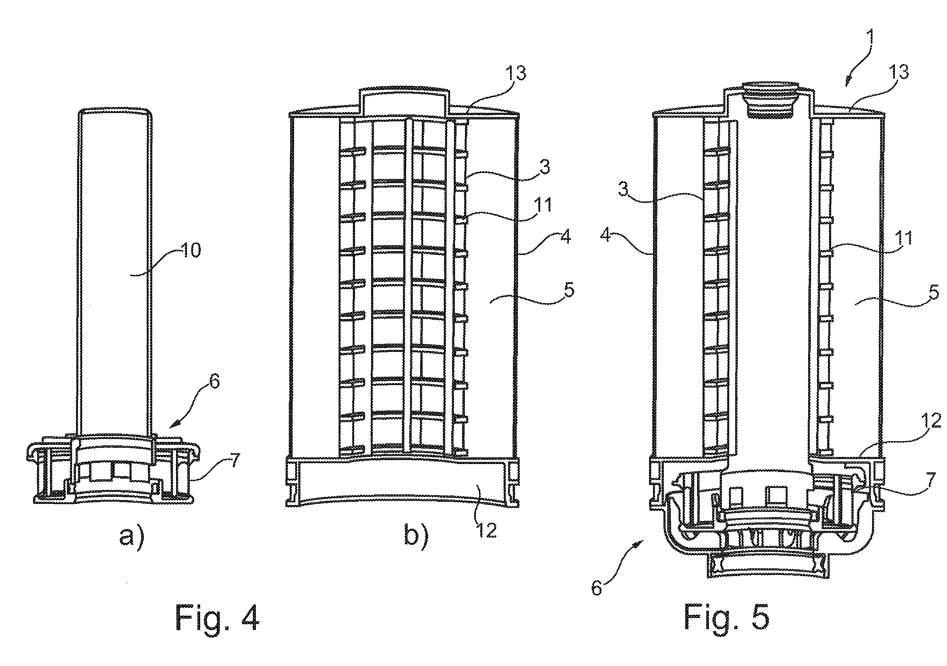

Betrachtet man das Filterelement 5 gemäß der Fig. 4b, so fällt auf, dass eine untere Endscheibe 12 derart ausgebildet ist, dass diese in mit dem Wasserabscheider 6 zusammengebautem Zustand den Rohraum 4' des Wasserabscheiders 6 sowie diesen selbst umfangsmäßig umgibt. Demgegenüber ist eine obere Endscheibe 13 in herkömmlicher Weise ausgebildet.

Um die Wasserabscheidewirkung zusätzlich verstärken zu können, kann auf der Reinseite 3, insbesondere an einer Außenseite der Innenzarge 11, ebenfalls ein koaleszierendes Element 14 angeordnet sein. Dies bewirkt bereits auf der Reinseite 3 des Filterelementes 5 unmittelbar nach dem Austritt des Kraftstoffstromes aus demselben, beim Aufprall auf das koaleszierende Element 14 ein Sammeln und Separieren von Wasseranteilen, die dann derart miteinander verbunden werden, dass sie allein aufgrund ihrer Schwerkraft nach unten in den Wassersammelraum 9 abfließen können. Zur Unterstützung des Abflussvorgangs des am koaleszierenden Elementes 14 abgeschiedenen Wassers, kann eine Kanalwand 15 des Strömungskanals 8 schräg abwärts nach radial außen ausgebildet sein. Zusätzlich können nicht gezeigte Strömungsleitelemente, beispielsweise auf der Reinseite 3 des Filterelementes 5 und/oder auf der Rohseite 4' des Wasserabscheiders 6 angeordnet sein, welche den radial nach innen durch das Filterelement 5 strömenden Kraftstoff in Umfangsrichtung umlenken und dadurch eine gleichmäßige Beaufschlagung der hydrophoben Membran 7 bewirken.

Insgesamt lässt sich mit einer derartigen erfindungsgemäßen Filtereinrichtung 1 eine deutlich verbesserte Wasserabscheidung erreichen, wodurch einerseits die Korrosionsgefahr im sich anschließenden Verbrennungsmotor vermindert werden kann und andererseits der Wirkungsgrad des Kraftstoffes verbessert werden kann. Selbstverständlich kann dabei die erfindungsgemäße Filtereinrichtung 1 auch zur Filtrierung von Schmierstoffen, insbesondere Ölen ausgebildet sein, welchen ein schädlicher Wasseranteil entzogen werden soll.

## Patentansprüche

1. Filtereinrichtung (1) für einen Verbrennungsmotor eines Kraftfahrzeuges, insbesondere ein Kraftstoff- oder Schmierstofffilter, mit einem Filtergehäuse (2) und einem in diesem angeordneten und in Radialrichtung von einer Rohseite (4) zu einer Reinseite (3) durchströmten (Ring-)filterelement (5),
**dadurch gekennzeichnet,**
- **dass** auf der Reinseite (3) des Filterelementes (5) und unterhalb desselben ein Wasserabscheider (6) angeordnet ist, der eine von radial außen nach radial innen für Kraft-/Schmierstoff durchgängige, hydrophobe und sich in Axialrichtung des Filterelementes (5) erstreckende, ringförmige Membran (7) aufweist,
- **dass** das Filterelement (5) von radial außen nach radial innen durchströmt ist,
- **dass** in Axialrichtung zwischen dem Filterelement (5) und dem Wasserabscheider (6) ein Strömungskanal (8) vorgesehen ist, der die Reinseite (3) des Filterelementes (5) mit einer Rohseite (4') des Wasserabscheiders (6) verbindet und der von Kraft-/Schmierstoff spiralförmig nach radial außen durchströmt ist, so dass an der Rohseite (4') des Wasserabscheiders (6) eine geringere Strömungsgeschwindigkeit als noch an der Reinseite (3) des Filterelementes (5) und eine vorzugsweise über den gesamten Umfang verteilte Einleitung in den Wasserabscheider (6) und eine gleichfalls verteilte Ausleitung des Kraft-/Schmierstoffes vorliegen, wobei eine aufsteigende Kraft-/Schmierstoffströmung auf der Rohseite des Wasserabscheiders (6) vorzugsweise gänzlich unterbunden ist.

2. Filtereinrichtung nach Anspruch 1,
**dadurch gekennzeichnet,**
**dass** die Rohseite (4') des Wasserabscheiders (6) als Sedimentationszone ausgebildet ist, in welcher Wasser aufgrund der Schwerkraft parallel zur stehend angeordneten Membran (7) des Wasserabscheiders (6) in einen Wassersammelraum (9) sedimentiert.

3. Filtereinrichtung nach Anspruch 1 oder 2,
**dadurch gekennzeichnet,**
**dass** sich der Wasserabscheider (6) nach unten konisch verjüngt.

4. Filtereinrichtung nach einem der Ansprüche 1 bis 3,
**dadurch gekennzeichnet,**
**dass** ein in Axialrichtung am Wasserabscheider (6) abstehendes Rohr (10) vorgesehen ist, welches als Aufnahmedorn zur Halterung des Filterelementes (5) dient.

5. Filtereinrichtung nach Anspruch 4,
**dadurch gekennzeichnet,**
**dass** zwischen dem Rohr (10) und dem Filterelement (5) eine das Filterelement (5) aussteifende Innenzarge (11) angeordnet ist.

6. Filtereinrichtung nach einem der Ansprüche 1 bis 5,
**dadurch gekennzeichnet,**
**dass** das Filterelement (5) und der Wasserabscheider (6) als separate Bauteile oder als gemeinsames Kombinationsbauteil ausgebildet sind.

7. Filtereinrichtung nach einem der Ansprüche 1 bis 6,
**dadurch gekennzeichnet,**
**dass** das Filterelement (5) eine untere Endscheibe (12) aufweist, die den Wasserabscheider (6) umfangsmäßig umgibt.

8. Filtereinrichtung nach einem der Ansprüche 1 bis 7,
**dadurch gekennzeichnet,**
**dass** die Membran (7) des Wasserabscheiders (6) als hydrophobes Sieb oder (Draht-)Gestrick ausgebildet ist.

9. Filtereinrichtung nach einem der Ansprüche 4 bis 8,
**dadurch gekennzeichnet,**
**dass** das Rohr (10) und der Wasserabscheider (6) miteinander verschweißt sind.

10. Filtereinrichtung nach einem der Ansprüche 5 bis 9,
**dadurch gekennzeichnet,**
**dass** auf der Reinseite (3) des Filterelementes (5), insbesondere an einer Außenseite der Innenzarge (11), ein Koaleszer (14) vorgesehen ist.

11. Filtereinrichtung nach einem der Ansprüche 1 bis 10,
**dadurch gekennzeichnet,**
**dass** auf der Reinseite (3) des Filterelementes (5) und/oder auf der Rohseite (4') des Wasserabscheiders (6) zumindest ein Leitelement angeordnet ist, welches den strömenden Kraftstoff in Umfangsrichtung umlenkt.

12. Filtereinrichtung nach einem der Ansprüche 1 bis 11,
**dadurch gekennzeichnet,**
**dass** im Strömungskanal (8) Strömungsleitelemente angeordnet sind, die eine tangential zur Membran (7) strömende Strömung auf der Rohseite (4') des Wasserabscheider (6) erzeugen.

13. Kraftfahrzeug mit einem, eine Filtereinrichtung (1) nach einem der Ansprüche 1 bis 12 aufweisenden Verbrennungsmotor.

## Claims

1. A filter device (1) for an internal combustion engine of a motor vehicle, in particular a fuel or lubricant filter, comprising a filter housing (2) and an (annular) filter element (5) which is arranged in the filter housing and which is penetrated by a flow in a radial direction from a raw end (4) to a pure end (3),
**characterized in**
- **that** at the pure end (3) of the filter element (5) and below the latter, a water separator (6) is arranged which has a hydrophobic, annular diaphragm (7) through which fuel/lubricant can flow from a radially outward to a radially inward direction and which extends in the axial direction of the filter element (5),
- **that** the filter element (5) is penetrated by a flow from radially outward to radially inward,
- **that** in the axial direction, between the filter element (5) and the water separator (6), a flow channel (8) is provided which connects the pure end (3) of the filter element (5) with a raw end (4') of the water separator (6) and through which the fuel/lubricant flows spirally and radially outwardly so that at the raw end (4') of the water separator (6), a low flow velocity is still present at the pure end (3) of the filter element (5) and an inflow preferably distributed over the entire circumference into the water separator (6) and a likewise distributed outflow of the fuel/lubricant are present, wherein a rising fuel/lubricant flow at the raw end of the water separator (6) is preferably completely prevented.

2. The filter device according to claim 1,
**characterized in**
**that** the raw end (4') of the water separator (6) is formed as sedimentation zone in which water, due to the gravitational force, sediments parallel to the vertically arranged diaphragm (7) of the water separator (6) into a water collection chamber (9).

3. The filter device according to claim 1 or 2,
**characterized in**
**that** the water separator (6) is conically tapered downwardly.

4. The filter device according to any one of the claims 1 to 3,
**characterized in**
**that** a tube (10) is provided which projects from the water separator (6) in the axial direction and which serves as receiving mandrel for retaining the filter element (5).

5. The filter device according to claim 4,
**characterized in**
**that** between the tube (10) and the filter element (5), an inner skirt (11) is arranged which stiffens the filter element (5).

6. The filter device according to any one of the claims 1 to 5,
**characterized in**
**that** the filter element (5) and the water separator (6) are formed as separate components or as a single combination component.

7. The filter device according to any one of the claims 1 to 6,
**characterized in**
**that** the filter element (5) has a lower end disk (12) which circumferentially surrounds the water separator (6).

8. The filter device according to any one of the claims 1 to 7,
**characterized in**
**that** the diaphragm (7) of the water separator (6) is formed as hydrophobic sieve or (wire) mesh.

9. The filter device according to any one of the claims 4 to 8,
**characterized in**
**that** the tube (10) and the water separator (6) are welded together.

10. The filter device according to any one of the claims 5 to 9,
**characterized in**
**that** a coalescer (14) is provided at the pure end (3) of the filter element (5), in particular on an outer side of the inner skirt (11).

11. The filter device according to any one of the claims 1 to 10,
**characterized in**
**that** at the pure end (3) of the filter element (5) and/or at the raw end (4') of the water separator (6), at least one guide element is arranged which deflects the flowing fuel in the circumferential direction.

12. The filter device according to any one of the claims 1 to 11,
**characterized in**
**that** flow guide elements are arranged in the flow channel (8), which flow guide elements generate a flow flowing tangentially to the diaphragm (7) at the raw end (4') of the water separator (6).

13. A motor vehicle comprising an internal combustion engine having a filter device (1) according to any one of the claims 1 to 12.

## Revendications

1. Dispositif de filtrage (1) pour moteur à combustion interne d'un véhicule automobile, notamment un filtre à carburant ou à lubrifiant, comportant un logement de filtre (2) et un élément de filtre (annulaire) (5) disposé dans celui-ci et traversé par un écoulement dans la direction radiale d'un côté brut (4) vers un côté purifié (3),
**caractérisé en ce que**
- sur le côté purifié (3) de l'élément de filtre (5) et au-dessous de celui-ci, un séparateur d'eau (6) est disposé, qui présente une membrane (7) annulaire, hydrophobe, perméable au carburant/lubrifiant radialement de l'extérieur vers radialement à l'intérieur et s'étendant dans la direction axiale de l'élément de filtre (5),
- l'élément de filtre (5) est traversé par un écoulement radialement de l'extérieur vers radialement à l'intérieur,
- dans la direction axiale entre l'élément de filtre (5) et le séparateur d'eau (6) un canal d'écoulement (8) est prévu, qui relie le côté purifié (3) de l'élément de filtre (5) à un côté brut (4') du séparateur d'eau (6) et qui est traversé en forme de spirale par le carburant/lubrifiant radialement vers l'extérieur, de telle sorte que sur le côté purifié (4') du séparateur d'eau (6) une vitesse d'écoulement plus petite que sur le côté purifié (3) de l'élément de filtre (5) et une introduction dans le séparateur d'eau (6) répartie de préférence sur la totalité de la circonférence et une évacuation du carburant/lubrifiant également répartie prédominent, dans lequel un écoulement croissant de carburant/lubrifiant est de préférence totalement empêché sur le côté purifié du séparateur d'eau (6).

2. Dispositif de filtrage selon la revendication 1,
**caractérisé en ce que**
le côté purifié (4') du séparateur d'eau (6) est conçu comme une zone de sédimentation, dans laquelle l'eau se sédimente dans un espace d'accumulation d'eau (9) en raison de la force de gravité parallèlement à la membrane (7) disposée à la verticale du séparateur d'eau (6).

3. Dispositif de filtrage selon les revendications 1 ou 2,
**caractérisé en ce que**
le séparateur d'eau (6) va en s'amincissant coniquement vers le bas.

4. Dispositif de filtrage selon une des revendications 1 à 3,
**caractérisé en ce que**
un tuyau (10) dépassant en saillie dans la direction axiale sur le séparateur d'eau (6) est prévu, lequel sert de mandrin porte-pièce pour soutenir l'élément de filtre (5).

5. Dispositif de filtrage selon la revendication 4,
**caractérisé en ce que**
entre le tuyau (10) et l'élément de filtre (5) un cadre intérieur (11) rigidifiant l'élément de filtre (5) est disposé.

6. Dispositif de filtrage selon une des revendications 1 à 5,
**caractérisé en ce que**
l'élément de filtre (5) et le séparateur d'eau (6) sont conçus comme des composants séparés ou comme une combinaison commune de composants.

7. Dispositif de filtrage selon une des revendications 1 à 6,
**caractérisé en ce que**
l'élément de filtre (5) présente une rondelle d'extrémité (12) inférieure, qui entoure la circonférence du séparateur d'eau (6).

8. Dispositif de filtrage selon une des revendications 1 à 7,
**caractérisé en ce que**
la membrane (7) du séparateur d'eau (6) est conçue comme un tamis ou un tricot de fils métalliques hydrophobe.

9. Dispositif de filtrage selon une des revendications 4 à 8,
**caractérisé en ce que**
le tuyau (10) et le séparateur d'eau (6) sont soudés l'un à l'autre.

10. Dispositif de filtrage selon une des revendications 5 à 9,
**caractérisé en ce que**
un coalesceur (14) est prévu sur le côté purifié (3) de l'élément de filtre (5), notamment sur un côté extérieur du cadre intérieur (11).

11. Dispositif de filtrage selon une des revendications 1 à 10,
**caractérisé en ce que**
sur le côté purifié (3) de l'élément de filtre (5) et/ou sur le côté purifié (4') du séparateur d'eau (6), au moins un élément conducteur est disposé, qui dévie le carburant s'écoulant dans la direction circonférentielle.

12. Dispositif de filtre selon une des revendications 1 à 11,
**caractérisé en ce que**
dans le canal d'écoulement (8) des éléments de conduction d'écoulement sont disposés, qui génèrent un écoulement s'écoulant tangentiellement à la membrane (7) sur le côté purifié (4') du séparateur d'eau (6).

13. Véhicule automobile comportant un moteur à combustion interne présentant un dispositif de filtre (1) selon une des revendications 1 à 12.
